# EUROPEAN PATENT APPLICATION

(11) **EP 3 825 859 A1**
(43) Date of publication of application: **26.05.2021**
(21) Application number: 19837321.9
(22) Date of filing: 10.07.2019
(51) Int. Cl.: G06F 13/00

(54) **COMMUNICATION ANALYSIS DEVICE, COMMUNICATION ANALYSIS METHOD AND PROGRAM**

(30) Priority: 17.07.2018 JP 2018134343
(71) Applicant: NEC Corporation, 108-8001 Tokyo (JP)
(72) Inventor: ASHINO Yuki, Tokyo 108-8001 (JP); SAMEJIMA Ayaka, Tokyo 108-8001 (JP)
(74) Representative: Betten & Resch
(86) International application number: PCT/JP2019/027282
(87) International publication number: WO 2020/017404

(57) **Abstract**

A communication analysis apparatus (10) includes a communication control unit (110) that causes each of a plurality of first nodes to transmit a same communication request to a second node to be analyzed, a response result acquisition unit (120) that acquires a response result by the first node being, which is transmitted from the second node to each of the plurality of first nodes in response to the communication request from each of the first nodes, a response result analysis unit (130) that analyzes a response result by the first node, and an output unit (140) that outputs a result of the analysis to an output apparatus.

## Description

### [Technical Field]

The present invention relates to a communication analysis apparatus, a communication analysis method, and a program.

### [Background Art]

Various types of service are provided on a network. One example of techniques related to a service provided on a network is disclosed in PTL 1 described below, for example. PTL 1 described below discloses a system and a method of globally sharing and transacting a content present on a region-by-region basis.

### [Citation List]

### [Patent Literature]

[PTL 1] Japanese Patent Application Publication (Translation of PCT Application) No. 2008-523524

### [Summary of Invention]

### [Technical Problem]

Quality of service is an important factor in determining an ability to attract a customer to the service. Thus, an entrepreneur who provides a service on a network needs to design a system in consideration of quality of the service. In order to achieve a high quality service being provided, a technique for analyzing a state of a system for providing a service is needed.

The present invention has been made in view of the above-described problem. One of objects of the present invention is to provide a technique for analyzing a system for providing a service on a network.

### [Solution to Problem]

A communication analysis apparatus according to the present invention, including:
a communication control unit that causes each of a plurality of first nodes to transmit a same communication request to a second node to be analyzed;
a response result acquisition unit that acquires a response result by the first node, which is transmitted from the second node to each of the plurality of first nodes in response to the communication request from each of the first nodes;
a response result analysis unit that analyzes a response result by the first node; and
an output unit that outputs a result of the analysis to an output apparatus.

A communication analysis method executed by a computer according to the present invention, the method including:
causing each of a plurality of first nodes to transmit a same communication request to a second node to be analyzed;
acquiring a response result by the first node, which is transmitted from the second node to each of the plurality of first nodes in response to the communication request from each of the first nodes;
analyzing a response result by the first node; and
outputting a result of the analysis to an output apparatus.

A program according to the present invention causes a computer to execute the communication analysis method described above.

### [Advantageous Effects of Invention]

According to the present invention, a support technique for optimally designing a system operating on a network is provided.

### [Brief Description of Drawings]

The above-described object, the other objects, features, and advantages will become more apparent from suitable example embodiments described below and the following accompanying drawings.

[Fig. 1] Fig. 1 is a diagram schematically illustrating processing performed by a communication analysis apparatus.
[Fig. 2] Fig. 2 is a block diagram illustrating a functional configuration example of the communication analysis apparatus.
[Fig. 3] Fig. 3 is a block diagram illustrating a hardware configuration of the communication analysis apparatus.
[Fig. 4] Fig. 4 is a sequence diagram illustrating a flow of processing according to the present invention.
[Fig. 5] Fig. 5 is a diagram illustrating one example of request definition information that defines a content of a communication request.
[Fig. 6] Fig. 6 is a diagram illustrating one example of node management information that manages a plurality of first nodes.
[Fig. 7] Fig. 7 is a diagram illustrating one example of information based on a response result of a second node being received by each of the plurality of first nodes.
[Fig. 8] Fig. 8 is a diagram illustrating one example of information indicating an analysis result by a response result analysis unit.
[Fig. 9] Fig. 9 is a diagram illustrating one example of information indicating an analysis result by the response result analysis unit.
[Fig. 10] Fig. 10 is a diagram illustrating one example of information indicating an analysis result by the response result analysis unit.
[Fig. 11] Fig. 11 is a diagram illustrating one example of information output from an output unit.

### [Example Embodiment]

Hereinafter, example embodiments of the present invention will be described by using drawings. Note that, in all of the drawings, similar components have similar reference signs, and description thereof will be appropriately omitted. Further, in each block diagram, each block represents a configuration of a functional unit instead of a configuration of a hardware unit unless otherwise described.

### <Outline>

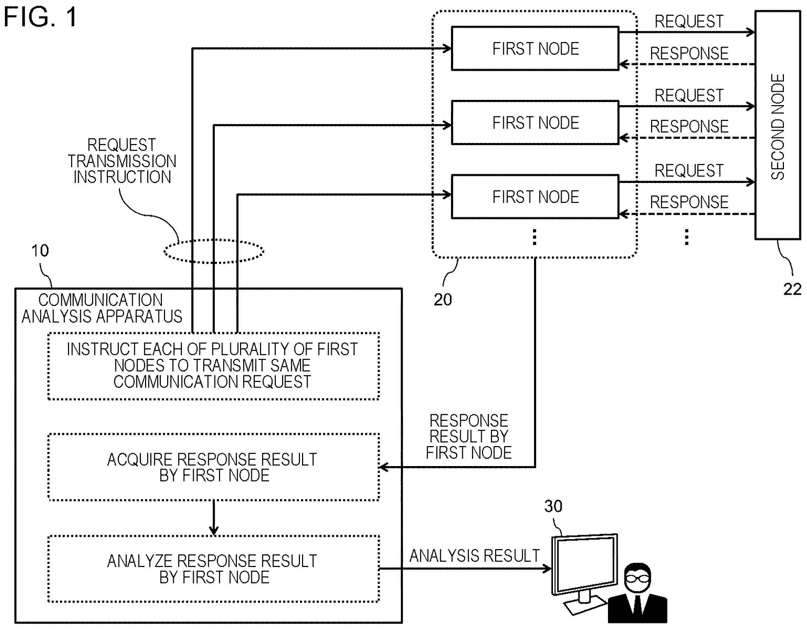

Fig. 1 is a diagram schematically illustrating processing performed by a communication analysis apparatus 10. In Fig. 1, the communication analysis apparatus 10 is communicably connected to a plurality of first nodes 20 via a not-illustrated network. Each of the first nodes 20 is communicably connected to a second node 22 via a not-illustrated network. Herein, the second node 22 is a node to be analyzed.

The communication analysis apparatus 10 performs processing below, for example. The communication analysis apparatus 10 instructs each of the plurality of first nodes 20 to transmit the same communication request as that of another first node 20. Herein, the "same communication request" refers to a communication request in which the same response is expected from the second node 22. In other words, the "same" herein refers to the same method and the same query performed when the plurality of first nodes 20 communicate with the second node 22. When each of the plurality of first nodes 20 receives from the communication analysis apparatus 10 an instruction to transmit a request, each of the plurality of first nodes 20 transmits the same communication request to the second node 22. The second node 22 makes a response to the communication request from each of the plurality of first nodes 20. The communication analysis apparatus 10 acquires a response result (response result by first node 20) received by each of the plurality of first nodes 20 from the second node 22. Then, the communication analysis apparatus 10 analyzes the response result by first node, and outputs the analysis result to an administrator output apparatus 30.

### <Action and Effect>

In the communication analysis apparatus 10 according to the present invention, the same communication request is transmitted from the plurality of first nodes 20 to the second node 22 to be analyzed. Then, an analysis is performed based on a response result (response result by first node 20) of the second node 22 responding to a communication request from each of the plurality of first nodes 20, and a result of the analysis is output to the administrator output apparatus 30. An administrator can recognize whether each of the first nodes 20 has an appropriate response (for example, whether latency of each of the first nodes 20 falls within an allowable range, and the like) by confirming information output onto the output apparatus 30. In other words, an administrator can accurately recognize a portion with a problem and a portion without a problem in a current system design, based on an output from the communication analysis apparatus 10, and perform necessary repair on the system design. In this way, the communication analysis apparatus 10 according to the present invention can optimize a system operating on a network, and provide a high quality service to a user.

### <Functional Configuration Example>

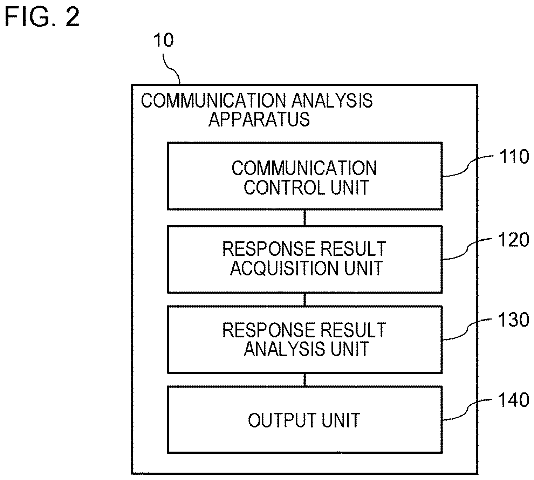

Fig. 2 is a block diagram illustrating a functional configuration example of the communication analysis apparatus 10. As illustrated in Fig. 2, the communication analysis apparatus 10 includes a communication control unit 110, a response result acquisition unit 120, a response result analysis unit 130, and an output unit 140.

The communication control unit 110 causes each of the plurality of first nodes 20 to transmit the same communication request to the second node 22. The response result acquisition unit 120 acquires a response result (response result by first node), which is transmitted from the second node 22 to each of the plurality of first nodes 20 in response to a communication request from each of the first nodes 20. The response result analysis unit 130 analyzes the response result by first node being acquired from the response result acquisition unit 120. For example, the response result analysis unit 130 analyzes whether there is a difference in response from the second node 22 among the plurality of first nodes 20. The output unit 140 outputs the analysis result of the response result analysis unit 130 to the administrator output apparatus 30.

### <Hardware Configuration Example of Communication Analysis Apparatus 10>

Each functional component unit of the communication analysis apparatus 10 may be achieved by hardware (for example: a hard-wired electronic circuit, and the like) that achieves each functional component unit, and may be achieved by a combination of hardware and software (for example: a combination of an electronic circuit and a program that controls the electronic circuit, and the like). Hereinafter, a case where each functional component unit of the communication analysis apparatus 10 is achieved by the combination of hardware and software will be further described.

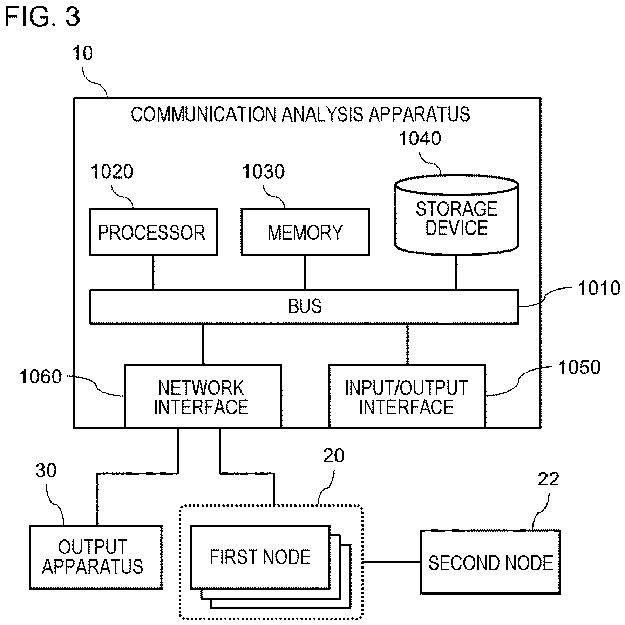

Fig. 3 is a block diagram illustrating a hardware configuration of the communication analysis apparatus 10. As illustrated in Fig. 3, the communication analysis apparatus 10 includes a bus 1010, a processor 1020, a memory 1030, a storage device 1040, an input/output interface 1050, and a network interface 1060.

The bus 1010 is a data transmission path for allowing the processor 1020, the memory 1030, the storage device 1040, the input/output interface 1050, and the network interface 1060 to transmit and receive data with one another. However, a method of connecting the processor 1020 and the like to each other is not limited to a bus connection.

The processor 1020 is a processor achieved by a central processing unit (CPU), a graphics processing unit (GPU), and the like.

The memory 1030 is a main storage configured with a random access memory (RAM) and the like.

The storage device 1040 is an auxiliary storage configured with a hard disk drive (HDD), a solid state drive (SSD), a memory card, a read only memory (ROM), or the like. The storage device 1040 stores a program module that achieves each function (such as the communication control unit 110, the response result acquisition unit 120, the response result analysis unit 130, and the output unit 140) of the communication analysis apparatus 10. The processor 1020 reads each program module onto the memory 1030 and executes the program module, and thus each function associated with the program module is achieved.

The input/output interface 1050 is an interface for connecting the communication analysis apparatus 10 and various types of input/output apparatuses. An input apparatus such as a keyboard and a mouse and an output apparatus such as a speaker and a display may be connected to the input/output interface 1050.

The network interface 1060 is an interface for connecting the communication analysis apparatus 10 to a network. The network is, for example, a local area network (LAN) and a wide area network (WAN). A method of the network interface 1060 connecting to the network may be a wireless connection or a wired connection. The communication analysis apparatus 10 can communicate, via the network interface 1060, with the plurality of first nodes 20 on the network and an administrator terminal (not illustrated) connected to the administrator output apparatus 30.

Note that Fig. 3 is merely an exemplification, and the hardware configuration of the communication analysis apparatus 10 is not limited to the configuration illustrated in Fig. 3. For example, the communication analysis apparatus 10 may be an apparatus (manager terminal) used by an administrator, and the administrator output apparatus 30 may be connected to the input/output interface 1050.

### <Flow of Processing>

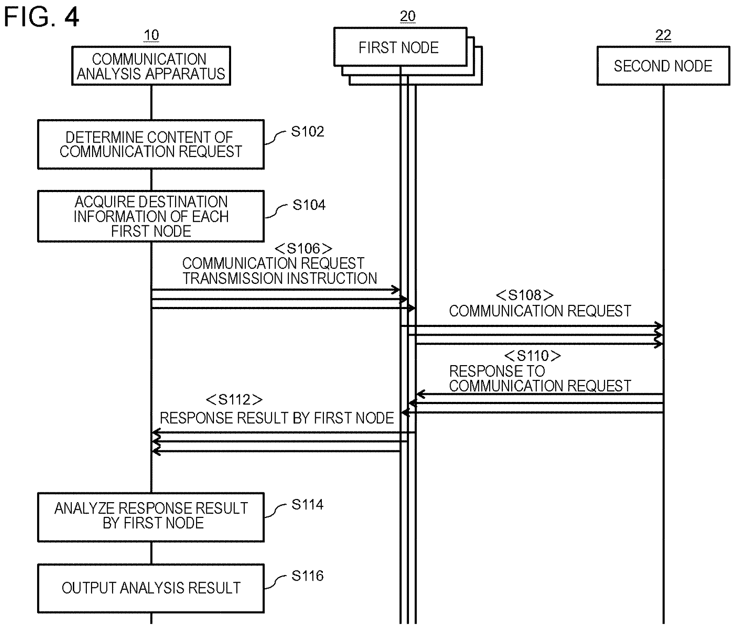

Fig. 4 is a sequence diagram illustrating a flow of processing according to the present invention. Hereinafter, the flow of the processing according to the present invention will be described along the sequence diagram in Fig. 4.

First, the communication analysis apparatus 10 (communication control unit 110) determines a content of a communication request to be transmitted from each of the plurality of first nodes 20 (S102).

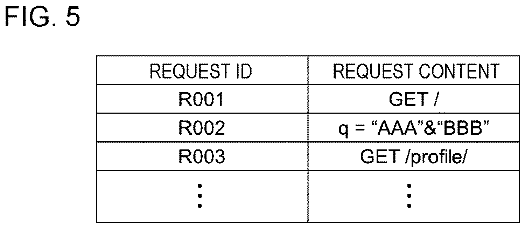

As one example, the communication control unit 110 may randomly select a content of a communication request from among pieces of request definition information (for example: Fig. 5) that predefine a content of the communication request.

Fig. 5 is a diagram illustrating one example of request definition information that defines a content of a communication request. The request definition information illustrated in Fig. 5 is stored in advance in a storage region such as the memory 1030 and the storage device 1040, for example. In the example in Fig. 5, each record is formed of two columns that are a "request identifier (ID)" and a "request content". The "request ID" is unique identification information assigned by content of a communication request. The "request content" is information indicating a specific content of the communication request to be transmitted from each of the plurality of first nodes 20. However, the request definition information (content of the communication request caused by the communication control unit 110 to be transmitted from each of the plurality of first nodes 20) is not limited to the example in Fig. 5. Specifically, in the request definition information illustrated in Fig. 5, a communication request related to a Web service such as a GET method is defined, which is not limited thereto. "What kind of content of a communication request is to be transmitted from the first node 20" may be freely defined in the request definition information. For example, in the request definition information, a communication request having a content that "a specific communication packet (for example, a synchronize (SYN) packet, and the like) is transmitted to a specific port" may be defined.

As another one example, the communication control unit 110 may determine a content of a communication request, based on a selection input of an administrator, for example. In this case, an administrator performs an instruction input of a communication request via an input apparatus connected to a not-illustrated administrator terminal. Specifically, an administrator inputs a request ID that identifies a content of a communication request by using the input apparatus of the not-illustrated administrator terminal. Herein, an administrator may input a communication request having a new content that is not present in a table illustrated in Fig. 5 by using the input apparatus of the not-illustrated administrator terminal. The communication control unit 110 can acquire an instruction input of an administrator from the administrator terminal, and determine a content of a communication request according to the instruction input.

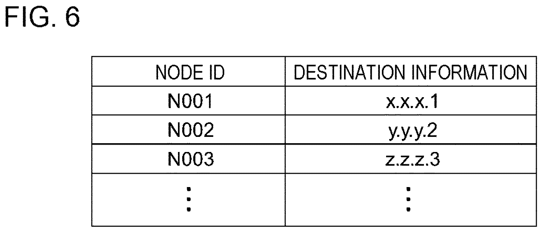

Referring back to Fig. 4, the communication control unit 110 acquires destination information of each of the plurality of first nodes 20 (S104). The destination information of each of the plurality of first nodes 20 is stored in a table as illustrated in Fig. 6, for example.

Fig. 6 is a diagram illustrating one example of node management information that manages the plurality of first nodes 20. The node management information illustrated in Fig. 6 is stored in advance in a storage region such as the memory 1030 and the storage device 1040, for example. In the example in Fig. 6, each record is formed of two columns that are a "node ID" and "destination information". The "node ID" is unique identification information assigned by first node 20. The "destination information" is information used in communication with each of the first nodes 20. In the example in Fig. 6, an IP address is stored as the destination information of each of the first nodes 20. However, the node management information is not limited to the example in Fig. 6. Note that the communication control unit 110 may acquire destination information by targeting some of the plurality of first nodes 20 managed in the node management information. In this case, the communication control unit 110 can determine the first node 20 as a target, based on an input from an administrator, for example.

Herein, at least some of the plurality of first nodes 20 are preferably located in a country or a region different from that of another first node 20. The first nodes 20 are interspersed in different countries or regions, and thus quality of a service provided from the second node 22 to be analyzed can be checked for each country or region.

Referring back to Fig. 4, the communication control unit 110 outputs an instruction to transmit a communication request, based on the content of the request determined in the processing in S102, to the first node 20 indicated by the destination information acquired in the processing in S104 (S106). Each of the plurality of first nodes 20 transmits a communication request to the second node 22 according to the instruction to transmit a communication request from the communication analysis apparatus 10 (S108). Herein, the plurality of first nodes 20 transmit, to the second node 22, communication requests that are the same to each other. When the second node 22 receives the communication request from each of the plurality of first nodes 20, the second node 22 makes an individual response to each of the communication requests (S110).

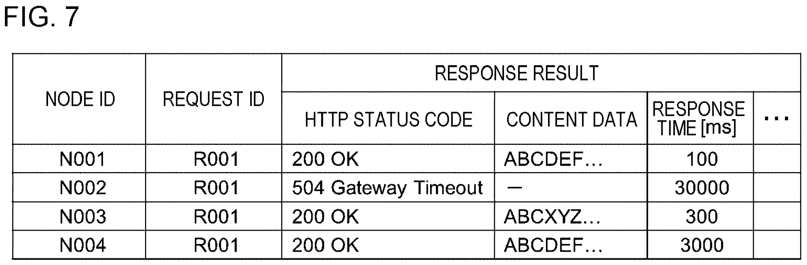

Then, the communication analysis apparatus 10 (response result acquisition unit 120) acquires a result (response result by first node 20) of response from the second node 22, which is received by each of the plurality of first nodes 20 in the processing in S108 (S112). The response result acquisition unit 120 stores the information acquired from each of the first nodes 20 in a predetermined storage region (such as the memory 1030 and the storage device 1040) in a form as illustrated in Fig. 7, for example. Fig. 7 is a diagram illustrating one example of information based on a response result of the second node 22 received by each of the plurality of first nodes 20. In the example in Fig. 7, each record is formed of three columns that are a "node ID", a "request ID", and a "response result". The "node ID" is unique identification information assigned by first node 20. The "response result" is information indicating a response content received by each of the first nodes 20 from the second node 22. Further, the column of the "response result" is formed of columns that are a "hypertext transfer protocol (HTTP) status code", a "content data", and a "response time". In the column of the "HTTP status code", an HTTP status code included in a response from the second node 22, which is received by each of the first nodes 20 is stored. In the column of the "content data", content data included in a response from the second node 22, which is received by each of the first nodes 20, are stored. Herein, the content data are, for example, data of a Web page output from the second node 22 in response to a communication request, and the like. Further, for example, in a case of a communication request that "a specific communication packet (for example, a SYN packet, and the like) is transmitted to a specific port of second node 22", data included in a header and a payload of a response packet to the communication packet may be used as content data. Further, in the column of the "response time", time (RTT: round trip time) since a communication request of the first node 20 is transmitted until a response is returned is stored. However, the information based on a response result of the second node 22 received by each of the plurality of first nodes 20 is not limited to the example in Fig. 7.

Referring back to Fig. 4, the communication analysis apparatus 10 (response result analysis unit 130) analyzes the response result by first node 20 being acquired in the processing in S112 (S114). Specifically, the response result analysis unit 130 detects a difference in response among the plurality of first modes 20, based on the response result by first node 20. Hereinafter, an operation of the response result analysis unit 130 will be described by taking a few specific examples.

### <Specific Example 1 of Analysis>

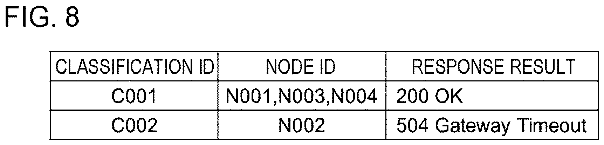

As one example, the response result analysis unit 130 analyzes a status code of hypertext transfer protocol (HTTP) included in a response result of each of the first nodes 20. For example, it is assumed that the response result as illustrated in Fig. 7 is acquired from each of four first nodes 20. In this case, the response result analysis unit 130 can detect a difference in HTTP status code (a difference between "200 OK" and "504 Gateway Timeout") in the response results by first node 20. The response result analysis unit 130 stores information related to the difference detected in such a manner in a storage region such as the memory 1030, for example (for example: Fig. 8). Fig. 8 is a diagram illustrating one example of information indicating an analysis result by the response result analysis unit 130. In the example in Fig. 8, the response result analysis unit 130 outputs information indicating a result of classifying the plurality of first nodes 20, based on a difference in HTTP status code.

### <Specific Example 2 of Analysis>

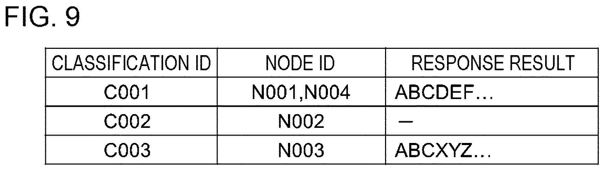

As another one example, the response result analysis unit 130 analyzes content data included in a response result of each of the first nodes 20. For example, it is assumed that the response result as illustrated in Fig. 7 is acquired from each of four first nodes 20. In this case, the response result analysis unit 130 can detect a difference in content data (a difference among "ABCDEF...", "ABCXYZ...", and "- (none)") in the response results by first node 20. The response result analysis unit 130 stores information related to the difference detected in such a manner in a storage region such as the memory 1030, for example (for example: Fig. 9). Fig. 9 is a diagram illustrating one example of information indicating an analysis result by the response result analysis unit 130. In the example in Fig. 9, the response result analysis unit 130 outputs information indicating a result of classifying the plurality of first nodes 20, based on a difference in content data.

### <Specific Example 3 of Analysis>

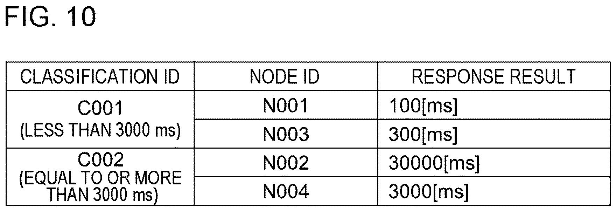

As another one example, the response result analysis unit 130 analyzes response time included in a response result of each of the first nodes 20. For example, it is assumed that the response result as illustrated in Fig. 7 is acquired from each of four first nodes 20. In this case, the response result analysis unit 130 can detect a difference in response event (a difference among "100 [ms]", "30000 [ms]", "1500 [ms]", and "300 [ms]") in the response results by first node 20. The response result analysis unit 130 stores information related to the difference detected in such a manner in a storage region such as the memory 1030, for example (for example: Fig. 10). Fig. 10 is a diagram illustrating one example of information indicating an analysis result by the response result analysis unit 130. In the example in Fig. 10, the response result analysis unit 130 outputs information indicating a result of classifying the plurality of first nodes 20, based on a difference in response time. Note that, in the example in Fig. 10, the response result analysis unit 130 uses 3000 [ms] as a threshold value, and detects a difference.

Note that the response result analysis unit 130 may analyze a response result by first node 20 by combining at least a part of the status code of hypertext transfer protocol (HTTP), the content data, and the response time described above. For example, the response result analysis unit 130 may detect a difference in response time with, as a target, only a normal response (response having an HTTP status code of "200 OK") from the second node 22. Further, for example, the response result analysis unit 130 may detect a difference in response result by first node 20 by using a combination of an HTTP status code and content data.

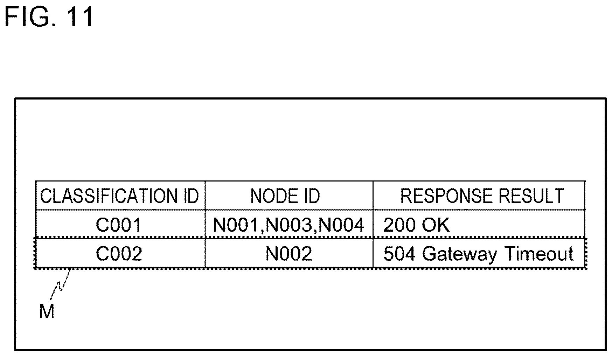

Referring back to Fig. 4, the output unit 140 outputs the analysis result by the response result analysis unit 130 to the administrator output apparatus 30 (S116). For example, the output unit 140 outputs, to the administrator output apparatus 30, the information (for example: Fig. 11) related to a difference in response among the plurality of first nodes 20 being detected by the response result analysis unit 130. Fig. 11 is a diagram illustrating one example of information output from the output unit 140. Note that the output unit 140 can read an analysis result output from the response result analysis unit 130 to the memory 1030, and generate information as illustrated in Fig. 11. Fig. 11 illustrates an example in which the output unit 140 outputs a screen including information related to a difference in HTTP status code. Herein, the output unit 140 may be configured in such a way as to emphasize and output a difference that needs to be noted by an administrator. For example, for a portion desired to be noted by an administrator, the output unit 140 may add a predetermined mark (for example: a sign M in Fig. 11), change at least any of a font, a size, and a color of a character, or change a color of a background portion. In this way, an administrator can easily recognize a portion that needs to be noted in a response result by first node 20.

While the example embodiments of the present invention have been described with reference to the drawings, the example embodiments are only exemplification of the present invention, and various configurations other than the above-described example embodiments can also be employed.

Further, the plurality of steps (processing) are described in order in the sequence diagram used in the above-described description, but an execution order of the steps to be executed is not limited to the described order. The order of the illustrated steps can be changed within an extent that there is not hindrance in context.

Apart or the all of the above-mentioned example embodiments may also be described in supplementary notes below, which is not limited thereto.
1. A communication analysis apparatus, including:
   a communication control unit that causes each of a plurality of first nodes to transmit a same communication request to a second node to be analyzed;
   a response result acquisition unit that acquires a response result by the first node, which is transmitted from the second node to each of the plurality of first nodes in response to the communication request from each of the first nodes;
   a response result analysis unit that analyzes a response result by the first node; and
   an output unit that outputs a result of the analysis to an output apparatus.
2. The communication analysis apparatus according to supplementary note 1, in which
   the response result acquisition unit detects a difference in response among the plurality of first nodes, based on the response result by the first node, and
   the output unit outputs information related to the difference detected by the response result analysis unit.
3. The communication analysis apparatus according to supplementary note 1 or 2, in which
   the response result analysis unit analyzes, for the response result by the first node, at least any one of a hypertext transfer protocol (HTTP) status code, content data, and response time.
4. The communication analysis apparatus according to any one of supplementary notes 1 to 3, in which
   at least some of the plurality of first nodes are located in a country or a region different from that of another first node.
5. A communication analysis method executed by a computer, the method including:
   causing each of a plurality of first nodes to transmit a same communication request to a second node to be analyzed;
   acquiring a response result by the first node, which is transmitted from the second node to each of the plurality of first nodes in response to the communication request from each of the first nodes;
   analyzing a response result by the first node; and
   outputting a result of the analysis to an output apparatus.
6. The communication analysis method executed by the computer according to supplementary note 5, further including:
   detecting a difference in response among the plurality of first nodes, based on the response result by the first node; and
   outputting information related to the detected difference.
7. The communication analysis method executed by the computer according to supplementary note 5 or 6, further including,
   analyzing, for the response result by the first node, at least any one of a hypertext transfer protocol (HTTP) status code, content data, and response time.
8. The communication analysis method according to any one of supplementary notes 5 to 7, in which
   at least some of the plurality of first nodes are located in a country or a region different from that of another first node.
9. A program causing a computer to execute the communication analysis method according to any one of supplementary notes 5 to 8.

This application is based upon and claims the benefit of priority from Japanese patent application No. 2018-134343, filed on July 17, 2018, the disclosure of which is incorporated herein in its entirety by reference.

## Claims

1. A communication analysis apparatus, comprising:
a communication control unit that causes each of a plurality of first nodes to transmit a same communication request to a second node to be analyzed;
a response result acquisition unit that acquires a response result by the first node, which is transmitted from the second node to each of the plurality of first nodes in response to the communication request from each of the first nodes;
a response result analysis unit that analyzes a response result by the first node; and
an output unit that outputs a result of the analysis to an output apparatus.

2. The communication analysis apparatus according to claim 1, wherein
the response result acquisition unit detects a difference in response among the plurality of first nodes, based on the response result by the first node, and
the output unit outputs information related to the difference detected by the response result analysis unit.

3. The communication analysis apparatus according to claim 1 or 2, wherein
the response result analysis unit analyzes, for the response result by the first node, at least any one of a hypertext transfer protocol (HTTP) status code, content data, and response time.

4. The communication analysis apparatus according to any one of claims 1 to 3, wherein
at least some of the plurality of first nodes are located in a country or a region different from that of another first node.

5. A communication analysis method executed by a computer, the method comprising:
causing each of a plurality of first nodes to transmit a same communication request to a second node to be analyzed;
acquiring a response result by the first node, which is transmitted from the second node to each of the plurality of first nodes in response to the communication request for each of the first nodes;
analyzing a response result by the first node; and
outputting a result of the analysis to an output apparatus.

6. The communication analysis method executed by the computer according to claim 5, further comprising:
detecting a difference in response among the plurality of first nodes, based on the response result by the first node; and
outputting information related to the detected difference.

7. The communication analysis method executed by the computer according to claim 5 or 6, further comprising,
analyzing, for the response result by the first node, at least any one of a hypertext transfer protocol (HTTP) status code, content data, and response time.

8. The communication analysis method according to any one of claims 5 to 7, wherein
at least some of the plurality of first nodes are located in a country or a region different from that of another first node.

9. A program causing a computer to execute the communication analysis method according to any one of claims 5 to 8.
